# EUROPÄISCHE PATENTANMELDUNG

(11) **EP 1 500 568 A2**
(43) Veröffentlichungstag der Anmeldung: **26.01.2005**
(21) Anmeldenummer: 04016956.7
(22) Anmeldetag: 19.07.2004
(51) Int. Cl.: B62B 1/26, B62B 1/10

(54) **Handkarre**

(30) Priorität: 22.07.2003 DE 10333449; 24.10.2003 DE 20316467 U
(71) Anmelder: Klier, Ellen, 82547 Eurasburg (DE); Krell, Birgit, 33132 Büren Harth (DE)
(72) Erfinder: Klier, Ellen, 82547 Eurasburg (DE); Klier, Günter, 82547 Eurasburg (DE)
(74) Vertreter: Heuer, Wilhelm, Dr.

(57) **Zusammenfassung**

Eine einachsige Handkarre hat eine langgestreckten Rahmen (1), der in einem unteren Bereich (1b) eine Lastauflage (4) und eine Radachse (3) aufweist, und der in einem oberem Bereich (1a) wenigstens einen Handgriff (15) aufweist, und eine Kralle (12) mit wenigstens einem der Lastauflage zugewandten freien Ende, die an dem Rahmen (1) bewegbar angeordnet ist.

## Beschreibung

Die vorliegende Erfindung betrifft eine einachsige Handkarre zur Beförderung von Lasten, insbesondere von Lasten in offenen Behältern, insbesondere von Pflanzen in offenen Kübeln, sowie ein Zubehörteil für eine solche Lastkarre.

Einachsige Handkarren zur Beförderung von Lasten sind in vielen Formen und angepasst an diverse Typen von unterschiedlichen Lasten bekannt. Sie haben im Allgemeinen einen langgestreckten, mehr oder weniger aufrechten Rahmen, an dem in einem unteren Bereich eine Radachse und in einem oberen Bereich wenigstens ein Handgriff angebracht ist. Die bekannten Sackkarren haben darüber hinaus als unteren Abschluss des Rahmens eine plattenförmige Lastauflage, auf die ein zu transportierender Sack gestellt, gegen den Rahmen gelehnt und dann durch Kippen der Karre angehoben und befördert werden kann. Bei Handkarren zur Beförderung von Druckgasflaschen kann die Lastauflage auf einen kleinen Haken reduziert sein, der in einen Fußring einer zu befördernden Gasflasche eingreift und diese so daran hindert, beim Transport am Rahmen zu verrutschen. Zur Sicherung der Druckgasflasche beim Anheben und beim Transport kann an einem oberen Bereich des Rahmens eine Kette befestigt sein, die um die zu transportierende Flasche geschlungen wird.

Bei sogenannten Stapelkarren, wie aus DE-GM 79 14 058 bekannt, die zum Beispiel zur Beförderung von gestapelten Flaschenkisten vorgesehen sind, ist die Lastauflage durch am Rahmen höhenverstellbare Haken ersetzt, die vorgesehen sind, um in eine Grifföffnung einer unteren Kiste eines Stapels eingeführt zu werden, hinter eine obere Griffleiste dieser Öffnung einzugreifen und beim Kippen der Karre die untere Kiste mitsamt allen darauf gestapelten Kisten anzuheben.

Keiner dieser bekannten Typen von Handkarren eignet sich befriedigend für die Beförderung von großen, offenen Behältern, insbesondere von bepflanzten Kübeln. Um etwa mit einer Sackkarre einen solchen Kübel sicher befördern zu können, müsste die Lastauflage den Kübel zumindest auf einem überwiegenden Teil seiner Standfläche unterstützen. Je größer die Lastauflage ist, um so beschwerlicher ist es, einen Kübel darauf in einer für einen sicheren Transport geeigneten Stellung zu platzieren. Außerdem macht eine große Lastauflage das Gerät sperrig und bei Nichtgebrauch beschwerlich zu lagern. Das notwendigerweise seitlich weit ausladende Gestell einer Sackkarre kann überdies Schwierigkeiten bereiten, wenn ein Kübel mit einer Pflanze befördert werden soll, deren Krone beträchtlich über die Ränder des Kübels hinausreicht.

Aufgabe der Erfindung ist, eine Handkarre zu schaffen, die sich gut zur Beförderung von breiten offenen Behältern mit gedrungenen Proportionen, insbesondere von Pflanzkübeln mit oder ohne Bepflanzung eignet.

Die Aufgabe wird gelöst durch eine Handkarre mit den Merkmalen des Anspruches 1. Die bewegbare Klaue kann erfindungsgemäß mit ihrem wenigstens einen freien Ende in die oberseitige Öffnung des zu transportierenden offenen Behälters eingeführt werden, so dass sie ein Herunterkippen des Behälters von der Lastauflage der Karre nach vorn verhindert, auch wenn die Lastauflage den Behälter nicht unterhalb seines Schwerpunkts unterstützt. Die sich schräg nach vorn und seitwärts erstreckenden Arme sichern den Behälter gegen ein Herunterkippen in seitlicher Richtung. Die Lastauflage kann daher klein gehalten werden, was zum einen den Platzbedarf der Karre gering hält und es zum anderen einfach macht, die Lastauflage so weit wie erforderlich unter der aufzunehmenden Last zu platzieren, damit die Klaue in deren Öffnung eingreifen kann und die Last somit angehoben werden kann.

Vorzugsweise ist die Klaue zu diesem Zweck in der Längsrichtung des Rahmens verschiebbar geführt. So ist sie auch leicht an unterschiedliche Höhen der zu befördernden Behälter anpassbar.

Die Verschiebbarkeit ist leicht realisierbar über eine an dem Rahmen verschiebbare Hülse, mit der die Klaue verbunden ist.

Vorzugsweise ist der Rahmen in einem Bereich oberhalb der Radachse durch einen einzigen Holm gebildet. Dies macht nicht nur die erfindungsgemäße Handkarre leicht und preiswert zu fertigen, sondern hat überdies den Vorteil, dass ein solcher einzelner Holm, wenn eine Kübelpflanze mit ausladender Krone zu befördern ist, im Allgemeinen ohne Schwierigkeiten in die Krone hineingeschoben werden kann, ohne diese zu beschädigen, bis der Holm in Kontakt mit dem Kübel der Pflanze gelangt und die Klaue in den Kübel eingeführt werden kann.

Um eine Verdrehung der Klaue gegen den Holm zu verhindern, können der Holm und die Hülse komplementäre, unrunde Querschnitte haben, zum Beispiel in Form von ovalen oder rechteckigen Profilen.

Besonders bevorzugt ist, dass die Klaue zwei Finger aufweist, die jeweils ein der Lastauflage zugewandtes freies Ende bilden. Diese zwei Finger bilden zusammen mit einem einzigen Holm des Rahmens eine stabile Fixierung, die einen auf die Karre geladenen Behälter an drei Punkten berührt und so verhindert, dass der Behälter, wenn er mit Hilfe der Karre angehoben ist und dabei eventuell etwas schräg steht, seitlich an dem Holm vorbeikippt und von der Karre fällt.

Der Abstand der Finger voneinander, genauer gesagt der Abstand zwischen den einen Behälter berührenden Punkten der zwei Finger, beträgt vorzugsweise zwischen 10 und 20 cm.

Um die Klaue an unterschiedliche Durchmesser von zu befördernden Kübeln anzupassen, kann der Abstand der Finger voneinander quer zur Verschiebungsrichtung der Klaue veränderbar gemacht sein. Dazu kann die Klaue z. B. mit einem arretierbaren Gelenk versehen sein. Eine andere Möglichkeit ist, die zwei Finger zu den freien Enden hin aufeinander zulaufend auszubilden, so dass die Tiefe, bis zu der die Finger in einen Kübel eingeführt werden können, von dessen Durchmesser abhängt.

Einer ersten bevorzugten Bauform zufolge sind die Finger in Querrichtung der ,Karre, d. h. am bezogen auf die Richtung der Radachse äußeren Ende der Arme gebildet, um so einen möglichst großen Abstand zwischen den einzelnen Fingern zu realisieren. Alternativ kommt eine Ausgestaltung in Betracht, bei der die Arme gewinkelt sind und jeweils bezogen auf die zur Radachse parallele Richtung einen vom Rahmen nach außen gerichteten Abschnitt und einen daran anschließenden nach innen gerichteten Abschnitt aufweisen, wobei in diesem Fall die Finger an einander zugewandten Enden der nach innen gerichteten Abschnitte angeordnet sein können. Der Abstand der Finger voneinander ist in diesem Fall gering, die Finger können einander sogar berühren oder zu einem einzigen Finger verbunden, z. B. verschweißt, sein; doch ergibt sich eine Sicherung eines zu befördernden Kübels gegen ein seitliches Herunterkippen von der Karre bereits allein durch die Tatsache, dass außenliegende Bereiche der Arme auf der Oberkante des Kübels aufliegen.

Bei einer solchen Gestaltung der Klaue ist es nicht erforderlich, dass zwei Finger gleichzeitig in einen zu befördernden Kübel eingreifen, es genügt ein einziger Finger, der allerdings vorzugsweise in einer auf der Radachse senkrechten Mittelebene der Handkarre angeordnet sein sollte.

Vorzugsweise befindet sich der wenigstens eine Handgriff der Karre bei stehender Karre ungefähr in Hüfthöhe eines durchschnittlich großen Benutzers, so dass dieser durch leichtes Abwärtsdrücken des Handgriffs, mit im Wesentlichen abwärts durchgestrecktem Arm, einen auf die Karre geladenen Kübel anheben und bewegen kann.

Zweckmäßig ist auch, den Rahmen zwischen der Achse und dem Handgriff teleskopisch ausziehbar zu gestalten, so dass ein Benutzer sich den Handgriff jeweils auf eine seinen Körpermaßen angepasste Höhe einstellen kann.

Die Ausziehbarkeit kann auch dazu dienen, den Rahmen in zwei Teile zu zerlegen, so dass die Karre bei Nichtgebrauch besonders platzsparend gelagert werden kann.

Diesem gleichen Zweck kann auch ein Scharnier dienen, das in den Rahmen zwischen Achse und Handgriff eingefügt ist.

Eine weitere Aufgabe der Erfindung ist, eine Handkarre der eingangs angegebenen Art anzugeben, die einen einfach realisierbaren und dennoch robusten Aufbau aufweist. Diese Aufgabe wird gelöst durch eine Handkarre mit den Merkmalen des Anspruchs 18. Indem ein an sich bekannter Sicherungsbügel zum Abstützen einer Last einerseits seitlich des Rahmens mit der Radachse und andererseits mit dem Rahmen fest verbunden ist, dient dieser Sicherungsbügel gleichzeitig zur Versteifung der Verbindung zwischen Radachse und Rahmen, die somit z.B. als eine einfache Schweißverbindung sich kreuzender Rohre ausgebildet sein kann.

Vorzugsweise liegt der dritte Punkt, an welchem der Sicherungsbügel am Rahmen befestigt ist, höher als die Radachse, um so die Entfernung zwischen diesem dritten Punkt und den zwei Befestigungspunkten an der Radachse groß machen zu können, so dass ein entsprechend großes die Verbindung zwischen Radachse und Rahmen belastendes Biegemoment durch den Sicherungsbügel abgefangen werden kann.

Der vertikale Abstand zwischen freien Enden des Sicherungsbügels einerseits und der Lastauflage der Handkarre andererseits ist vorzugsweise so bemessen, dass ein Kübeluntersetzer zwischen diesen freien Enden und der Lastauflage einklemmbar ist. So unterstützt der Kübeluntersetzer einen darauf befindlichen Kübel auch dann, wenn er nicht selbst vollflächig von der Lastauflage unterstützt ist.

Als eine zusätzliche Sicherung einer aufgenommenen Last gegen Herunterfallen kann eine Handkarre der oben beschriebenen Art ferner mit einem Spanngurt zum Herumlegen um eine zu befördernde Last ausgestattet sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht einer ersten Ausgestaltung der erfindungsgemäßen Handkarre;
- Fig. 2,: in gegenüber Figur 1 vergrößertem Maßstab, das Fahrgestell der Karre;
- Fig. 3: das Fahrgestell in einer Draufsicht;
- Fig. 4: eine Seitenansicht der verschiebbaren Klaue;
- Fig. 4A: einen Schnitt durch die Klaue gemäß einer bevorzugten Weiterbildung;
- Fig. 5: eine Draufsicht auf die Klaue aus Fig. 4;
- Fig. 6: eine Seitenansicht einer zweiten Ausgestaltung der erfindungsgemäßen Handkarre mit ruhender Last;
- Fig. 7: eine partielle Vorderansicht der zweiten Ausgestaltung;
- Fig. 8: eine partielle Draufsicht der zweiten Ausgestaltung;
- Fig. 9: eine Seitenansicht der zweiten Ausgestaltung mit angehobener Last;
- Fig. 10: eine erste Abwandlung der zweiten Ausgestaltung in einer Draufsicht;
- Fig. 11: eine Abwandlung der zweiten Ausgestaltung mit angehobener Last;
- Fig. 12: ein vergrößertes Detail aus Fig. 9;
- Fig. 13: eine Vorderansicht einer dritten Ausgestaltung der Handkarre;
- Fig. 14: eine Seitenansicht einer Abwandlung der Klaue;
- Fig. 15: eine Draufsicht auf die Klaue aus Fig. 14;
- Fig. 16: eine Seitenansicht einer zweiten Abwandlung der Klaue;
- Fig. 17: eine Draufsicht auf die Klaue aus Fig. 16;
- Fig. 18: eine Seitenansicht einer zweiten Abwandlung der Klaue;
- Fig. 19: eine Draufsicht auf die Klaue aus Fig. 16;
- Fig. 20: eine Draufsicht auf ein erstes Zubehörteil zum Erleichtern des Anhebens einer Last;
- Fig. 21: einen Schnitt durch das Zubehörteil der Fig. 20 entlang der Linie XXI-XXI;
- Fig. 22: ein zweites Zubehörteil, teils in Seitenansicht, teils im Schnitt; und
- Fig. 23: eine Ansicht des zweiten Zubehörteils von unten.

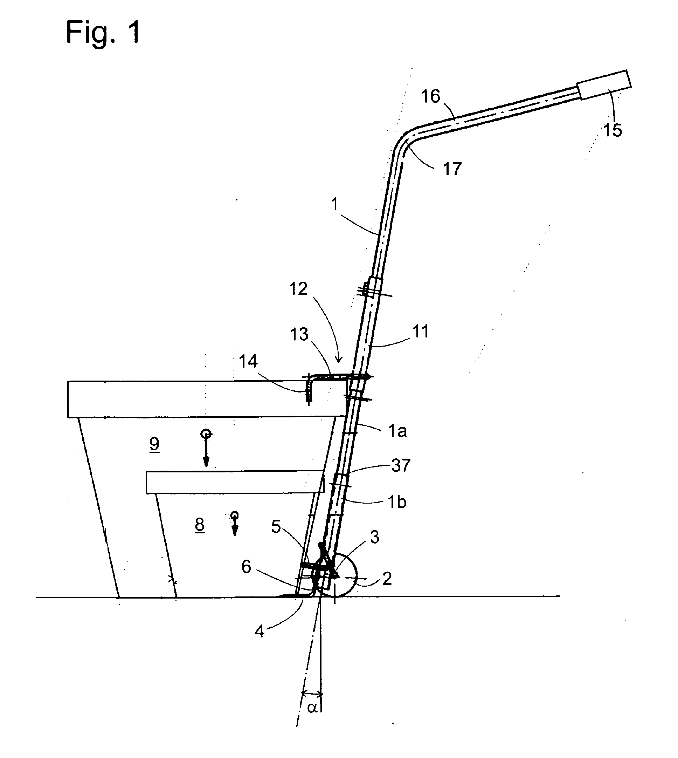

Die in Figur 1 in Seitenansicht gezeigte Karre hat einen Rahmen in Form eines einzigen langgestreckten Holmes 1 aus Stahlrohr, an das in einem unteren Bereich eine mit zwei Rädern 2 bestückte Achsstange 3, eine Lastauflage 4 und ein Sicherungsbügel 5 angeschweißt sind.

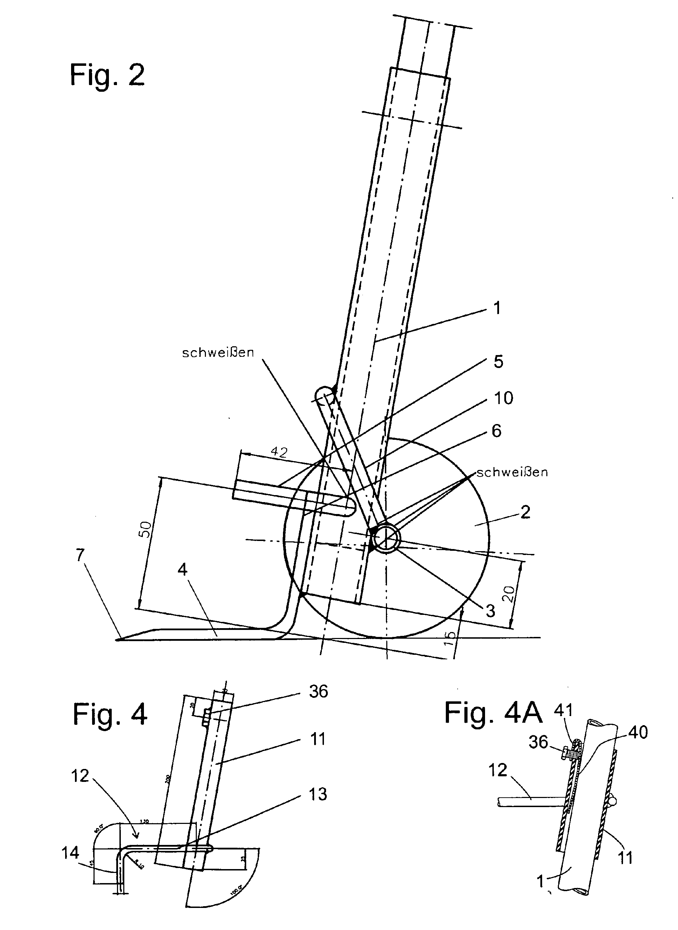

Wie insbesondere in der vergrößerten Ansicht der Figur 2 zu sehen, handelt es sich bei der Lastauflage 4 um einen horizontalen Schenkel eines in etwa L-förmigen Metallstückes, dessen aufrechter Schenkel 6 am Holm 1 angeschweißt ist. Die Kantenlänge der im Wesentlichen rechteckigen Lastauflage 4 beträgt wenige Zentimeter. Die Lastauflage 4 hat an ihrem vom Holm 1 abgewandten Rand 7 einen spitz zulaufenden Querschnitt, der es erleichtert, die Lastauflage 4 unter eine auf dem Boden stehende aufzunehmende Last zu schieben, ohne diese hierfür vorher anzuheben.

Figur 1 zeigt die Karre in einer Stellung, in der die Lastauflage 4 flach auf dem Boden ruht. In dieser Stellung ist der Holm 1 mit einem Winkel α gegen die Vertikale geneigt. Dieser Winkel α entspricht in etwa dem typischen Öffnungswinkel der kegelstumpfförmigen Wände typischer Blumentöpfe oder Pflanzkübel, von denen zwei, mit 8 bzw. 9 bezeichnet, in verschiedenen Größen in Figur 1 eingezeichnet sind. Durch diese Orientierung des Holmes 1 wird erreicht, dass die Lastauflage 4 trotz ihrer geringen Abmessungen unter Kübel von praktisch beliebigem Durchmesser geschoben werden kann, bevor der obere Rand eines solchen Kübels 8, 9 gegen den Holm 1 stößt.

Wie in den Figs 2 und 3 zu erkennen, ist wenige Zentimeter oberhalb der Lastauflage 4 am Holm 1 der gekrümmte Sicherungsbügel 5 durch eine Querbohrung des Holmes 1 geführt und darin verschweißt. Die zwei der Last zugewandten freien Enden des Sicherungsbügels 5 dienen als Anschläge für große Pflanzkübel und stabilisieren diese beim Transport in seitlicher Richtung.

Die seitlich gegen den Holm 1 geschweißte Achsstange 3 ist stabilisiert durch einen V-förmigen Träger 10, dessen mittlerer Bereich an einer der Last zugewandten Seite des Holmes 1 verschweißt ist und dessen Enden mit der Achsstange 3 in der Nähe von deren die Räder 2 tragenden Enden verschweißt sind.

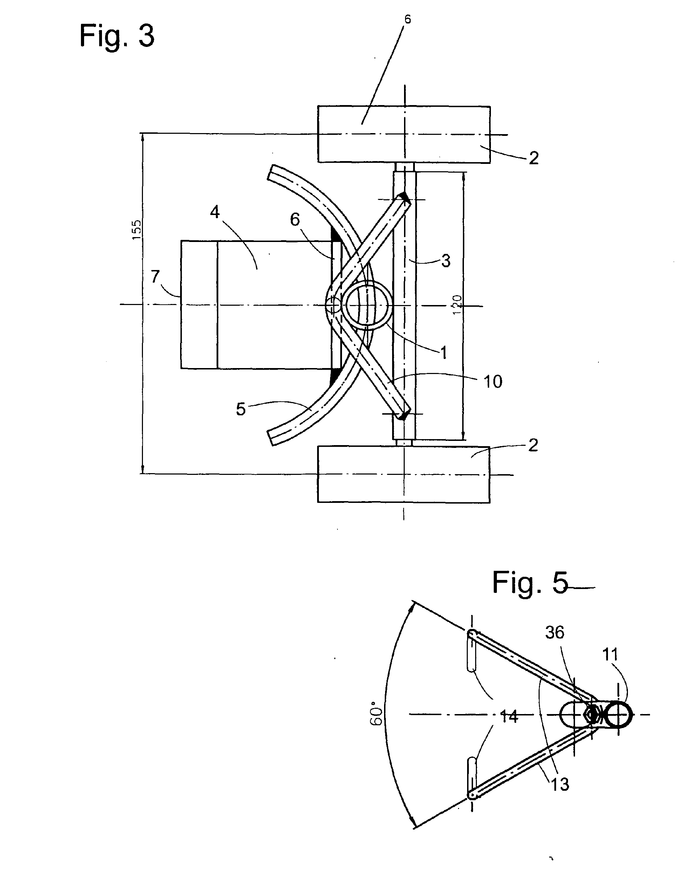

In einem mittleren Bereich des Holmes 1 ist eine Hülse 11 entlang des Holmes verschiebbar angeordnet, die eine in Draufsicht in etwa V-förmige Klaue 12 trägt. Ein mittlerer Bereich der Klaue 12 ist an der Hülse 11 an einer von der Last 8,9 abgewandten Seite verschweißt; von dort aus erstrecken sich zwei Arme 13 der Klaue 12 unter einem Winkel von ca. 60° zueinander in Richtung der Last und laufen jeweils in einen abwärts gekrümmten Finger 14 aus. Wie insbesondere in Figur 5 zu erkennen ist, laufen die Finger 14 zu ihren freien Enden hin aufeinander zu. Die Tiefe, bis zu der die Finger 14 in einen zu transportierenden Pflanzkübel 8, 9 eingreifen können, hängt von dessen Durchmesser und der Dicke eines umlaufenden Randwulstes des Kübels ab. Durch die konvergente Orientierung der Finger 14 ist es möglich, bei einer Vielzahl von Kübeldurchmessern und -wanddicken den oberen Rand des Kübels 8 oder 9 zwischen dem Holm 1 und den Fingern 14 einzuklemmen und so sicher zu fixieren. Eine Schraube 36, die sich durch eine Gewindebohrung der Hülse erstreckt, so dass sie mit ihrer Spitze gegen den Holm 1 pressen kann, oder ein anderes Arretierungsmittel kann zur Fixierung der Hülse 11 am Holm 1 vorgesehen werden. Im einfachsten Fall kann ein solches Arretierungsmittel aber auch entfallen und die Klaue 12 nur durch ihr Eigengewicht und das der Hülse 11 am Rand des Kübels 8 oder 9 in Stellung gehalten sein.

Eine bevorzugte Ausgestaltung eines Arretierungsmittels ist in Fig. 4A gezeigt. Die Hülse 11 umgibt den Holm 1 mit Spiel, und in einem Zwischenraum zwischen Hülse 11 und Holm ist eine gekrümmte Blattfeder 40 unter Spannung eingeschoben, so dass sie in ihrem mittleren Bereich gegen den Holm 1 und an ihren oberen und unteren Enden gegen die Hülse stark genug drückt, um ein Abrutschen der Klaue am Holm 1 aufgrund ihres Eigengewichts zu verhindern. Ein weiterer Nutzeffekt der Feder 40 ist, dass sie - wenn Holm 1 und Hülse 11 rund sind - eine ungewollte Drehung der Hülse 11 um den Holm 1 verhindert.

Die Feder 40 ist an ihrem oberen Ende nach außen umgebogen und läuft in einer außen an der Hülse anliegenden Lasche 41 aus. Die Schraube 36 quert eine Bohrung der Lasche, so dass die Blattfeder nicht verloren gehen kann. Überdies drückt die Spitze der Schraube in dem Zwischenraum gegen die Blattfeder. Durch Verstellen der Schraube ist somit die Kraft, mit der die Blattfeder 40 gegen den Holm 1 drückt, nach Wunsch eines Benutzers einstellbar.

Einer nicht in der Zeichnung dargestellten Weiterbildung zufolge ist die Klaue 12, genauer gesagt ihre Arme 13, quer zum Holm 1 längenverstellbar, um die Klaue an unterschiedliche Dicken eines oberen Randwulstes eines zu transportierenden Kübels anpassen zu können.

Um die Finger 14 der Klaue in einen Kübel einzuführen, kann an der Basis der Arme auch ein Scharnier gebildet sein, das um eine zur Radachse 3 parallele Achse schwenkbar ist und es erlaubt, die Finger von oben in einen Kübel hineinzuschwenken.

Ein Griff 15 an einem abgewinkelten oberen Endbereich 16 des Holmes 1 befindet sich in einer Höhe von ca. 90 bis 110 cm über dem Boden. Dies entspricht in etwa der Hüfthöhe eines durchschnittlichen Benutzers. Um einen mit Hilfe der Klaue 12 an der Karre verankerten Pflanzkübel 8, 9 anzuheben, drückt der Benutzer von oben auf den Griff 15. Wenn er sich in natürlicher, aufrechter Körperhaltung mit nach unten ausgestrecktem Arm auf den Griff 15 stützt, so dass der Griff 15 nur wenige Zentimeter tiefer kommt als in der Ruhestellung der Karre in Figur 1, kommt der Kübel 8, 9 vom Boden frei und kann mit der Karre bewegt werden.

Aufgrund der großen Länge des abgewinkelten oberen Endbereiches 16 - projiziert auf den Boden beträgt der Abstand zwischen dem Griff 15 und der Achsstange 3 ca. 30 bis 60 cm - ist nur eine geringe Druckkraft erforderlich, um auch schwere Kübel anzuheben, und auch für Lenkbewegungen steht ein großer Hebelarm zur Verfügung, der die Karre sehr leicht manövrierbar macht.

Zur Manövrierbarkeit der Karre trägt auch ein mit zwischen 10 und 30 cm, vorzugsweise ca. 15 cm recht geringer Abstand der Räder 2 voneinander bei.

Bei der in Figur 1 gezeigten Karre ist der Holm 1 aus zwei Rohrstücken 1a, 1b zusammengesetzt, die formschlüssig ineinandergeschoben und miteinander verbunden sind. Dabei hat das untere Rohrstück 1b einen größeren Querschnitt und eine größere Wandstärke als das obere 1a, da es das gesamte Gewicht des Kübels von der Lastauflage 4 auf die Achsstange 3 übertragen muss, während an dem Rohrstück 1a nur die vergleichsweise geringen Druck- und Lenkkräfte des Benutzers wirken. Die Verbindung zwischen den zwei Rohrstücken 1a, 1b kann dauerhaft sein, zum Beispiel durch eine Schweißnaht 37, es kann sich aber auch um eine lösbare Verbindung, zum Beispiel eine Schraub- oder Rastverbindung handeln, die es erlaubt, die zwei Rohrstücke 1a, 1b teleskopisch gegeneinander zu verschieben, um so die Höhe des Griffes 15 einzustellen, und/oder die Rohrstücke bei Nichtgebrauch voneinander zu trennen, um so die Karre platzsparend lagern zu können.

Denkbar ist auch, die beiden Rohrstücke 1a, 1b durch eine beispielsweise von Fahrradsätteln bekannte Klemmverbindung aneinander zu befestigen. Eine solche Verbindung erlaubt es, die Höhe des Griffes 15 stufenlos einzustellen und so exakt an die Bedürfnisse jedes einzelnen Benutzers unabhängig von seiner Körpergröße anzupassen.

Um eine besonders platzsparende Lagerung des Gerätes zu ermöglichen, kann ferner in Betracht gezogen werden, im oberen Bereich des Holmes, insbesondere in der Umgebung des Knickes 17, ein Gelenk einzufügen, das es erlaubt, den Holm einerseits in der in Figur 1 gezeigten Gebrauchsstellung zu fixieren, andererseits aber auch den oberen Endbereich 16 in eine zum Rest des Holmes 1 parallele Stellung zu schwenken.

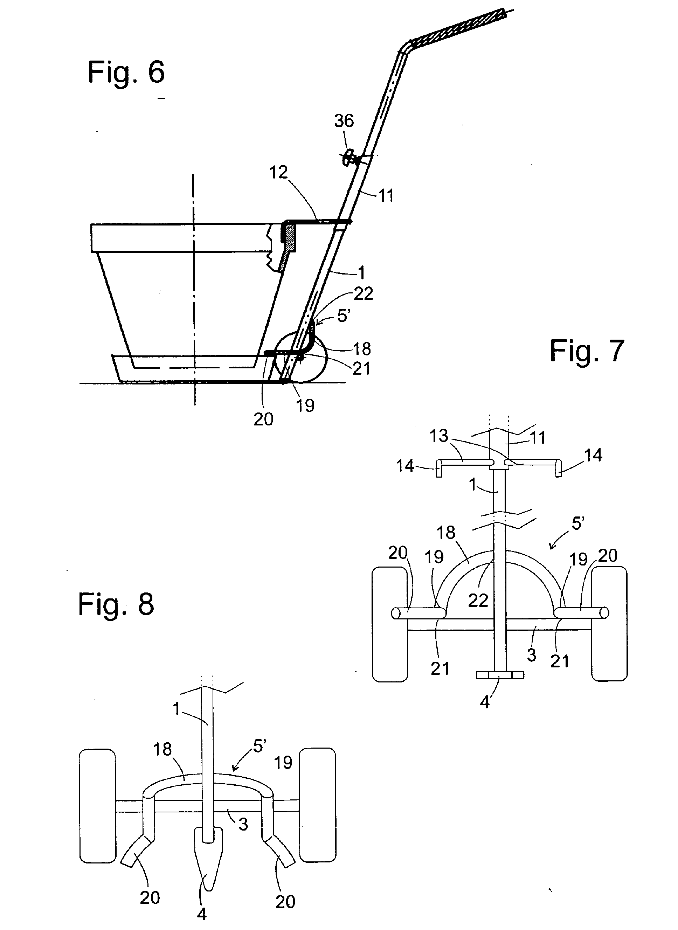

Die Fig. 6 bis 9 zeigen eine zweite Ausgestaltung der erfindungsgemäßen Handkarre.

Die Klaue 12 und die sie verschiebbar tragende Hülse 11 sind die gleichen wie bei der ersten Ausgestaltung, so dass die Ansichten der Fig. 4 und 5 auf diese zweite Ausgestaltung identisch übertragbar sind. Unterschiede zwischen den zwei Ausgestaltungen bestehen im Aufbau des Fahrgestells, und zwar sind bei der zweiten Ausgestaltung der Sicherungsbügel 5 und der die Verbindung der Achsstange 3 mit dem Holm 1 versteifende Träger 10 zu einem Sicherungsbügel 5' verschmolzen, der sich einstückig zusammensetzt aus einem zentralen Bogen 18 der, wie in Fig. 6 gezeigt, in einer in etwa vertikalen Ebene angeordnet ist, zwei sich von den Enden des zentralen Bogens 18 nach vorn, in Richtung auf einen auf der Lastauflage 4 ruhenden Pflanzkübel 8 zu erstreckenden Armen 19 und bogenförmigen Anlageschenkeln 20, die sich von den Enden der Arme 19 aus in einer horizontalen Ebene nach vorn und seitwärts nach außen erstrecken.

Der Sicherungsbügel 5' versteift das Fahrgestell durch zwei Schweißpunkte 21 zwischen den Armen 19 und der Achsstange 3 und einem dritten Schweißpunkt 22, der den zentralen Bogen 18 oberhalb der Achsstange 3 mittig mit dem Holm 1 verbindet. Der zentrale Bogen 18 ist hier halbkreisförmig dargestellt, es kommt jedoch jede beliebige andere Gestaltung in Betracht, die eine starre Verbindung zwischen den Schweißpunkten 21, 22 gewährleistet.

Der Abstand zwischen der Lastauflage 4 und der Unterseite der Arme 19 bzw. Anlageschenkel 20 des Sicherungsbügels 5' ist an die Höhe eines Untersetzers 23 des Pflanzkübels 8 angepasst, so dass dieser Untersetzer 23, wenn die Lastauflage 4 unter ihn geschoben ist, den Sicherungsbügel 5 an dessen Armen 19 und/oder Anlageschenkeln 20 berührt und so kippsicher eingeklemmt ist. So wirkt der Untersetzer 23 wie eine Vergrößerung der Fläche der Lastauflage 4, die den Pflanzkübel 8 absolut kippsicher abstützt, auch wenn dieser, wie in Fig. 6 dargestellt, die Anlageschenkel 20 nicht erreicht.

Wie Fig. 8 zeigt, ist die Lastauflage 4 zu ihrer Spitze hin ähnlich einem Tortenheber zugespitzt.

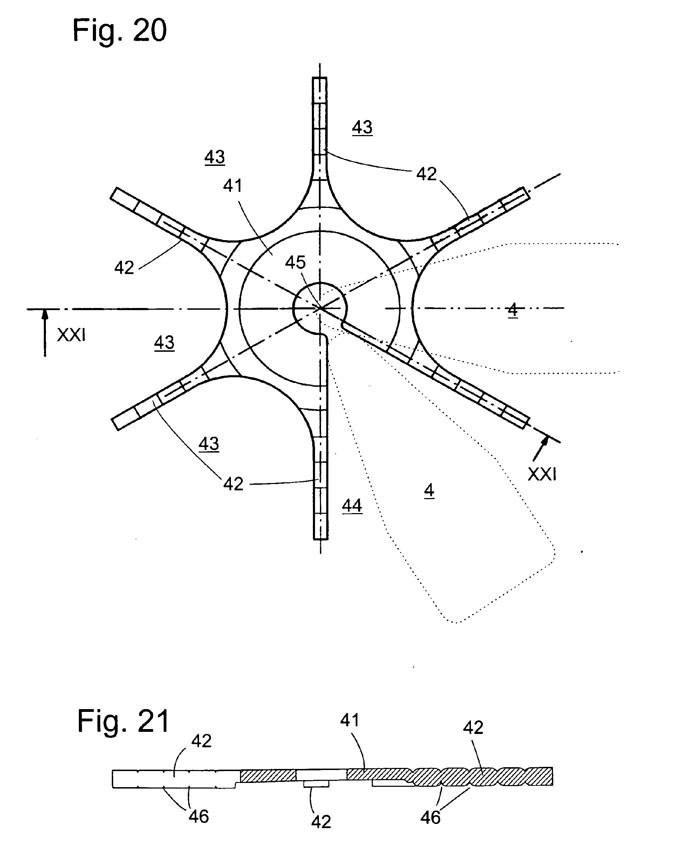

Der Zweck dieser Maßnahme wird an späterer Stelle in Verbindung mit den Figs. 20 bis 23 deutlich werden.

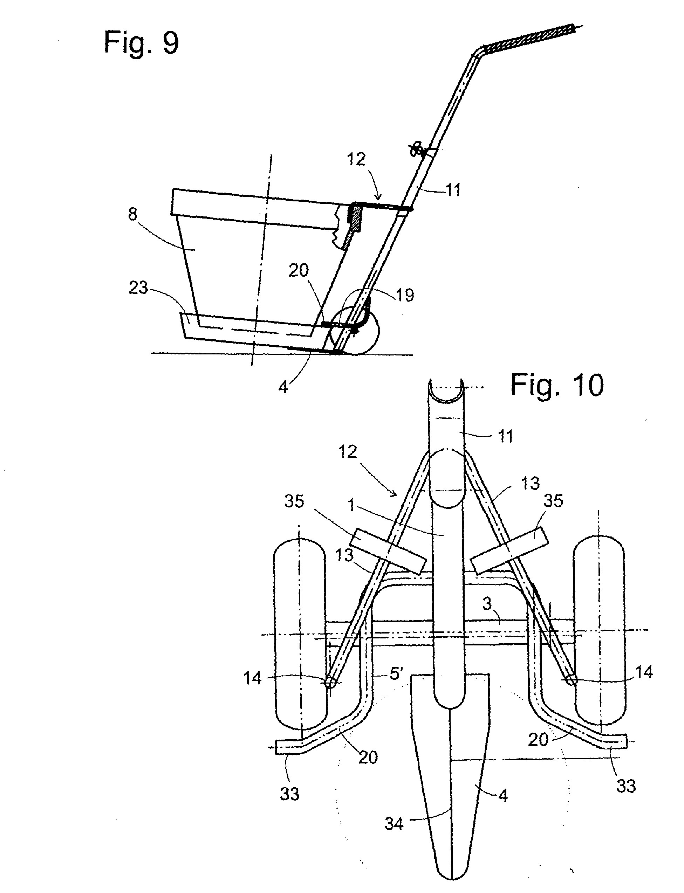

Fig. 10 zeigt eine weiterentwickelte Ausgestaltung der Handkarre in einer Draufsicht. Sie unterscheidet sich von der anhand der Figs. 6 bis 9 beschriebenen durch drei Merkmale, die unabhängig voneinander realisiert sein können.

Zum einen sind die Anlageschenkel 20 des Sicherungsbügels 5' an ihren äußeren Enden durch zur Achsstange 3 parallele Abschnitte 33 verlängert, um auszuschließen, dass eine scharfe Spitze einen aufgenommenen Pflanzkübel berühren und beschädigen kann.

Zum anderen ist die Lastauflage 4 entlang einer Mittellinie 34 leicht geknickt, um mit einer geringen Materialstärke eine hohe Tragfähigkeit zu erzielen.

Drittens sind auf die Arme 13 der Klaue 12 scheibenförmige Sicherungskörper 35 reibschlüssig aufgesteckt, die beim Aufladen eines Gefäßes nach dem Einführen der Finger 14 darein von außen gegen dessen Wand geschoben werden können. Eine solche Sicherung ist insbesondere zur Handhabung von hohen, schlanken Gefäßen sinnvoll, die eine vergleichsweise geringe Standfestigkeit haben und bei denen die Möglichkeit besteht, dass sie ohne eine solche Sicherung gegen den Holm 1 kippen und dabei Schaden nehmen. Anstatt durch Reibschluss könnten die Sicherungskörper 35 auch durch Gewindeeingriff an den Armen 13 verschiebbar gehalten sein.

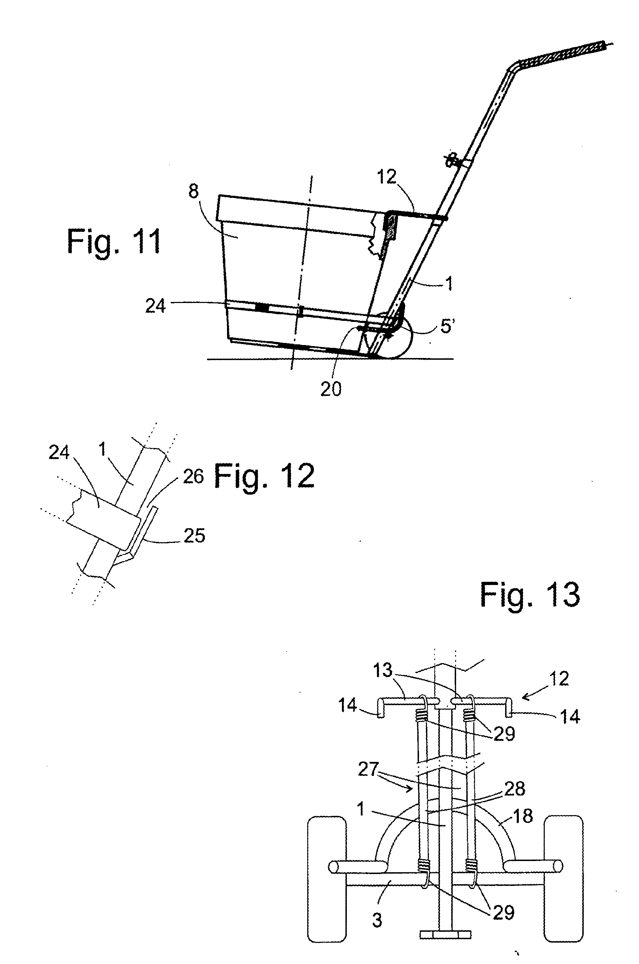

Fig. 11 zeigt in einer Seitenansicht analog der Fig. 9 eine Weiterentwicklung der in den Fig. 6 bis 9 dargestellten Handkarre. Ein Sicherungsgurt 24 ist um einen unteren Bereich eines auf die Karre geladenen Pflanzkübels 8 und des Holms 1 geschlungen, um den Pflanzkübel 8 gegen den Holm 1 zu ziehen und so zu sichern. Der in Fig. 10 dargestellte Pflanzkübel 8 hat keinen Untersetzer, so dass er an den Anlageschenkeln 20 des Sicherungsbügels 5' anliegt.

Der Sicherungsgurt 24 kann dauerhaft am Holm 1 oder einem anderen geeigneten Teil des Fahrgestells der Karre befestigt sein und kann, damit er bei Nichtgebrauch nicht im Weg ist, z.B. über die Klaue 12 gehängt werden. Vorzugsweise ist der Sicherungsgurt 24 jedoch abnehmbar und wie in Fig. 12 gezeigt am Holm 1 gegen Abrutschen einfach durch einen Haken 25 gesichert, der sich von einer mit dem Holm verbundenen Wurzel aus über einige Zentimeter parallel zum Holm nach oben erstreckt und so einen Spalt 26 bildet, in welchen der Sicherungsgurt 24 bei Gebrauch eingehängt werden kann.

Eine dritte Ausgestaltung der Handkarre ist in Fig. 12 in einer partiellen Vorderansicht gezeigt. Sie unterscheidet sich von der Ausgestaltung der Fig. 6 bis 9 durch das Vorhandensein von zwei Zugfedern 27, hier in Form von zwei Gummiseilen 28, die an ihren Enden Haken 29 tragen, von denen der eine die Achsstange 3 und der andere einen Arm der Klaue 12 umschlingt.

Die Zugfedern 27 üben auf die Klaue 12 eine entlang des Holms 1 nach unten gerichtete Kraft aus, die ein unbeabsichtigtes Entweichen der Finger 14 der Klaue 12 aus einem auf die Karre geladenen Pflanzkübel verhindert, auch wenn die Hülse 11 nicht, wie in Fig. 4 gezeigt, durch eine Klemmschraube 36 oder dergleichen am Holm 1 arretierbar ist.

Selbstverständlich können die zwei Zugfedern 27 der Fig. 13 auch durch eine einzelne symmetrisch an der Klaue 12 angreifende Zugfeder ersetzt werden, beispielsweise durch ein einzelnes Gummiseil, das mit Haken an beiden Enden an der Klaue 12 angreift und um die Achsstange 3 herumgeschlungen ist. Eine solche Zugfeder böte überdies die Möglichkeit, sie, wenn ein sehr großer Kübel geladen werden muss, mit einem Ende an der Klaue 12 und mit ihrem anderen Ende an der Achsstange 3 oder dem zentralen Bogen 18 einzuhaken und so die zum Anheben der Klaue in eine zum Einführen in den Kübel erforderliche Höhe gegen die Feder auszuübende Kraft gering zu halten.

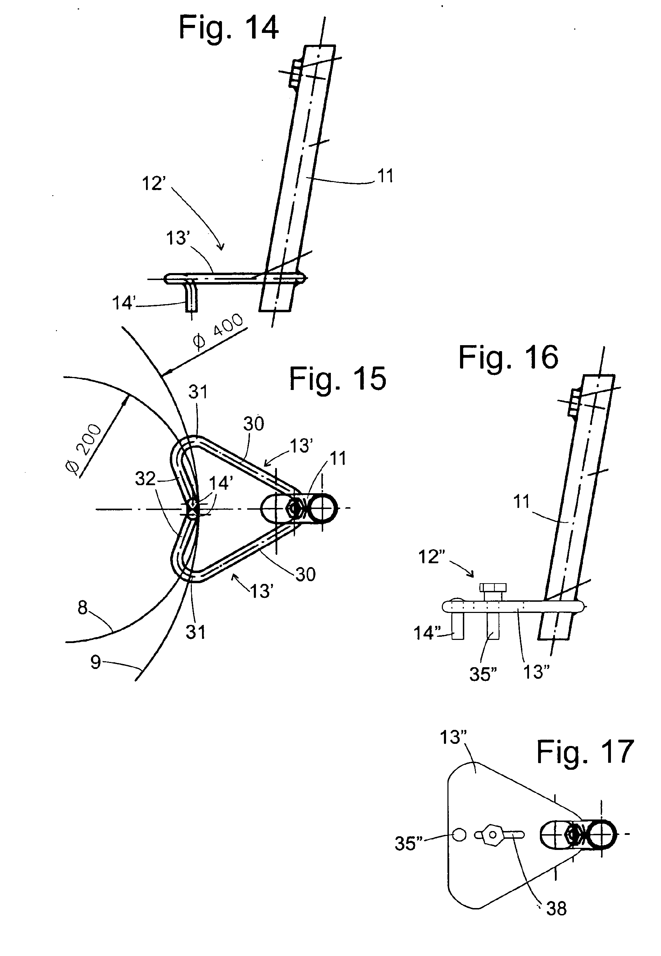

Die Fig. 14 und 15 zeigen in Ansichten analog den Fig. 4 und 5 eine Seitenansicht bzw. eine Draufsicht auf eine alternative Ausgestaltung einer Klaue 12'. Die Hülse 11 dieser Klaue ist identisch mit der in Fig. 4 gezeigten. Anstelle von sich geradlinig von der Hülse 11 fort erstreckenden Armen 13, wie in Fig. 5 gezeigt, weist die Klaue 12' Arme 13' auf, die jeweils einen sich von der Hülse 11 aus geradlinig nach vorn und zur Seite erstreckenden "Oberarmabschnitt" 30, einen daran anschließenden gekrümmten "Ellenbogenabschnitt" 31 und einen vom Ellenbogenabschnitt 31 aus zu einer vertikalen Mittelebene der Karre hin verlaufenden "Unterarmabschnitt" 32 aufweisen. Von den Unterarmabschnitten 32 nach unten abgebogene Finger 14' berühren einander an der Mittelebene; sie können zur Versteifung der Klaue 12' auch miteinander verschweißt sein und so effektiv einen einzigen Finger bilden. Die Finger 14' dieser Ausgestaltung bewirken aufgrund ihrer engen Nachbarschaft keine nennenswerte Sicherung eines geladenen Kübels gegen ein seitliches Wegkippen. Diese Sicherung wird jedoch dadurch erreicht, dass die Ellenbogenabschnitte 31 der Arme jeweils in einem Abstand von der Mittelebene gegen die Oberkante des Kübels drücken. Wie aus Fig. 15 deutlich wird, in der exemplarisch die oberen Ränder von zwei verschieden großen Kübeln 8, 9 eingezeichnet sind, ist die Klaue 12' für stark unterschiedliche Kübeldurchmesser brauchbar und erlaubt es, diese Kübel unabhängig von ihren Durchmessern in einer gleichen Orientierung in Bezug auf den Holm zu laden.

Eine weitere alternative Ausgestaltung einer Klaue 12" ist in den Figs. 16 und 17 in zu den Figs 14, 15 analogen Darstellungen gezeigt. Hier sind die Arme 13' zu einer in etwa dreieckigen Platte 13" verschmolzen, und ein einzelner Finger 14" an einer von der Hülse 11 abgewandten Breitseite des Dreiecks ist zum Einführen in einen Kübel vorgesehen.

Ein in einem Langloch 38 verschiebbar geführter und durch Schraubklemmung arretierbarer zweiter Finger 35" übernimmt die Funktion der Sicherungskörper 35 aus Fig. 10.

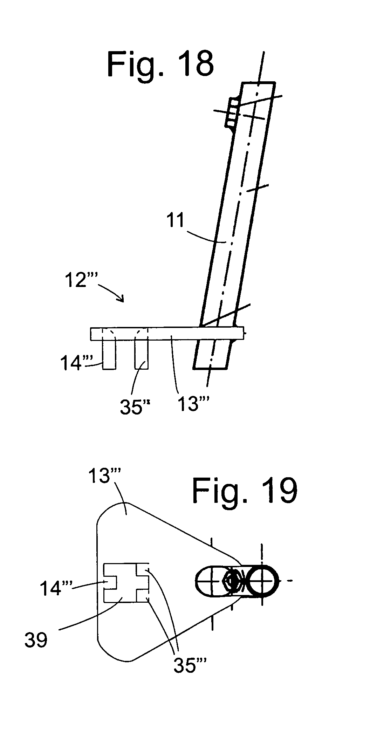

Eine mit besonders wenig Aufwand realisierbare Klaue 12"' zeigen Die Figs 18 und 19. Auch hier sind die Arme zu einer dreieckigen Platte 13"' verschmolzen, und aus dieser Platte sind durch eine im Zickzack verlaufende Stanzung drei Finger freigeschnitten und nach unten ausgeklinkt, von denen einer, mit 14"' bezeichnet, zum Eingreifen in einen Kübel dient und die zwei anderen, mit 35"' bezeichnet, die dem Finger 14"' an einem durch die Ausklinkung in der Platte 35"' entstandenen Loch 39 gegenüberliegen und die Wand eines solchen Kübels von außen abstützen können.

Eine erste Ausgestaltung eines Zubehörteils für die erfindungsgemäße Karre, welches das Aufnehmen von Pflanzkübeln oder anderen schweren Behältern mit der oben beschriebenen Handkarre oder einer anderen zum Einschieben unter einer aufzunehmenden Last vorgesehenen Lastauflage erleichtert, ist in Fig. 20 in einer Draufsicht und in Fig. 21 in einem Schnitt entlang der Linie XXI-XXI aus Fig. 20 gezeigt. Das Zubehörteil nach dieser ersten Ausgestaltung ist als ein von der aufzunehmenden Last getrenntes Teil ausgebildet. Bei diesem Zubehörteil handelt es sich um einen einstückigen Formkörper aus hartem oder flexiblem Kunststoff, Gummi oder Metall. Er hat die Form eines Sterns mit einer Mehrzahl von mit einem zentralen, ring- oder ringsegmentförmigen Kern 41 verbundenen und sich von diesem aus radial erstreckenden, in einem gleichmäßigen Winkelabstand angeordneten Strahlen 42. Das Zubehörteil ist vorgesehen, um auf einem Fußboden als Unterlage für einen Pflanzkübel oder einen Untersetzer eines Pflanzkübels platziert zu werden; die Stärke seiner Strahlen 42 entspricht wenigstens der Stärke der Lastauflage 4 der Handkarre, so dass die Spitze der Lastauflage 4 in einen Zwischenraum 43 oder 44 zwischen zwei Strahlen 42 bis in eine Stellung eingeschoben werden kann, in der die Spitze der Lastauflage 4 nicht weit vom Mittelpunkt 45 entfernt ist oder diesen sogar erreicht. Der Pflanzkübel sollte auf dem Zubehörteil so platziert sein, dass seine vertikale Mittelachse durch den Mittelpunkt 45 verläuft. Mit Hilfe des Zubehörteils ist es möglich, die Lastauflage 4 unter einen Pflanzkübel einzuschieben, ohne dass der hierfür gekippt werden muss, was das Aufladen eines Kübels auf die Karre beträchtlich erleichtert.

Das Zubehörteil kann eine überall gleichbleibende Dicke aufweisen; in diesem Fall kann die Lastaufnahme 4 nur so nah an den Mittelpunkt 45 herangeführt werden, wie der Umriss des Kerns 41 dies zulässt. Vorzugsweise ist jedoch, wie in Fig. 21 deutlich wird, die Dicke des Kerns 41 geringer als die der Strahlen 42, und der Kern berührt den Untergrund nicht, sondern ein Zwischenraum zwischen dem Kern und dem Untergrund ist hoch genug, um die Lastaufnahme 4 darin bis zum Mittelpunkt 45 einführen zu können. Die Dicke der Strahlen 42 kann z. B. ca. 10 mm und die des Kerns die Hälfte davon betragen.

Einer der Zwischenräume zwischen den Strahlen 42, in der Fig. mit 44 bezeichnet, erstreckt sich bis zu einer den Mittelpunkt 45 umgebenden zentralen Öffnung des Zubehörteils, so dass in diesem Zwischenraum 44 die Lastauflage 4 auch dann bis nah an den Mittelpunkt eingeschoben werden kann, wenn Kern und Strahlen gleich dick sind und kein Zwischenraum unter dem Kern vorhanden ist. Ein solcher vertiefter Zwischenraum erleichtert außerdem das Abfließen von überschüssigem Gießwasser aus einem zentralen Abflussloch eines darauf stehenden Kübels.

Wie der Schnitt der Fig. 21 zeigt, sind an den Strahlen 42 in regelmäßigen Abständen Schwachstellen 46 geformt. Die Schwachstellen 46 liegen auf konzentrischen Kreisen um den Mittelpunkt 45 und sie sind vorgesehen, um an ihnen die Strahlen 42 jeweils entsprechend dem Durchmesser eines Kübels oder Untersetzers, mit dem das Zubehörteil verwendet werden soll, einzukürzen, so dass das Zubehörteil nicht darunter herausragt. Je nach Material des Zubehörteils kann das Einkürzen durch Abbrechen oder Schneiden, z.B. mit einer Schere oder einem Seitenschneider, erfolgen.

Anstatt als Verjüngung in Dickenrichtung könnten die Schwachstellen auch als Verjüngung in Breiten- bzw. Umfangsrichtung, durch Perforation oder dergleichen ausgebildet sein; sie könnten auch durch aufgedruckte oder aufgeprägte Schnittmarkierungen ersetzt werden.

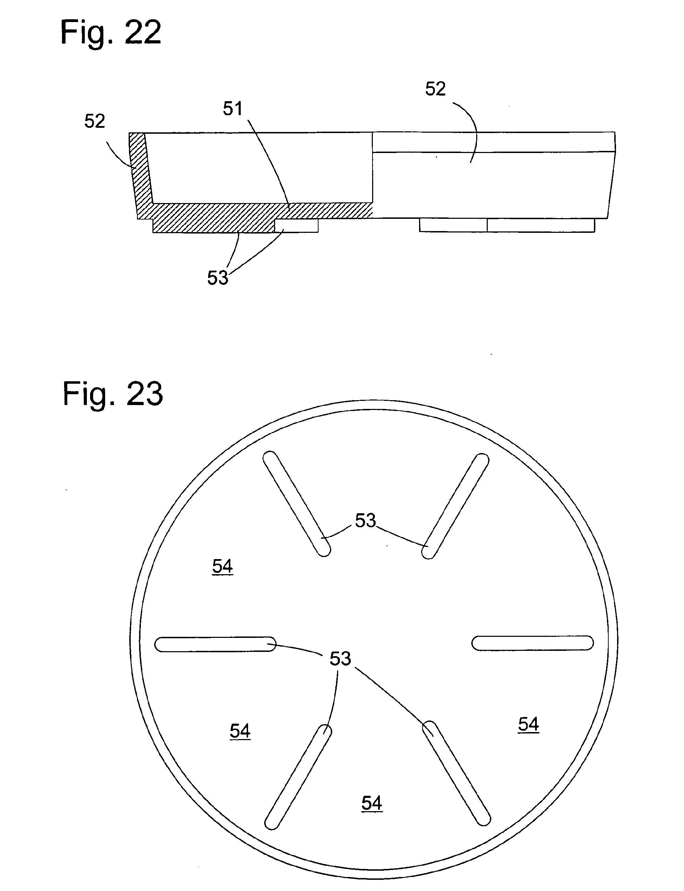

Ein zweites Zubehörteil in Form eines an die erfindungsgemäße Karre angepassten Untersetzers ist in Fig. 22 teils im Schnitt, teils in einer Seitenansicht und in Fig. 23 in einer Ansicht von unten gezeigt. Der Untersetzer hat einen flachen Boden 51 und eine den Boden umgebende Seitenwand 52. An der Unterseite des Bodens sind mehrere radial orientierte Rippen 53 gebildet, deren Höhe jeweils wenigstens der Stärke der Lastauflage 4 entspricht, so dass diese in die Zwischenräume 54 zwischen den Rippen von außen eingeschoben werden kann, um den Untersetzer mitsamt einem darauf befindlichen Kübel anzuheben. Diese Rippen weisen in radialer Richtung innere Endpunkte auf, deren Abstand voneinander groß genug ist, um ein Vordringen der Lastauflage zwischen den Rippen hindurch bis unter den Mittelpunkt der Bodenplatte oder zumindest bis in dessen Nähe zu erlauben.

## Patentansprüche

1. Einachsige Handkarre mit einem langgestreckten Rahmen (1), der in einem unteren Bereich (1b) eine von dem Rahmen (1) aus nach vorn vorstehende Lastauflage (4) und eine Radachse (3) aufweist, und der in einem oberem Bereich (1a) wenigstens einen Handgriff (15) aufweist, **dadurch gekennzeichnet, dass** eine Klaue (12) mit wenigstens einem der Lastauflage zugewandten freien Ende und von dem Rahmen (1) aus sich nach vorn erstreckenden und in seitlicher Richtung auseinanderlaufenden Armen (13, 13') an dem Rahmen (1) bewegbar angeordnet ist.

2. Handkarre nach Anspruch 1, **dadurch gekennzeichnet, dass** die Klaue (12) in Längsrichtung des Rahmens (1) verschiebbar geführt ist.

3. Handkarre nach Anspruch 2, **dadurch gekennzeichnet, dass** die Klaue (12) mit einer an dem Rahmen (1) verschiebbaren Hülse (11) verbunden ist.

4. Handkarre nach einem der vorhergehenden Ansprüche, **gekennzeichnet durch** ein Federelement (27) zum Beaufschlagen der Klaue (12) auf die Lastauflage (4) zu.

5. Handkarre nach einem der vorhergehenden Ansprüche, **dadurch gekennzeichnet, dass** der Rahmen (1) in einem Bereich oberhalb der Radachse (3) durch einen einzigen Holm (1) gebildet ist.

6. Handkarre nach Anspruch 3 und Anspruch 5, **dadurch gekennzeichnet, dass** der Holm (1) und die Hülse (11) komplementäre, unrunde Querschnitte haben.

7. Handkarre nach einem der vorhergehenden Ansprüche, **dadurch gekennzeichnet, dass** die Klaue (12) zwei Finger (14) aufweist, die jeweils ein der Lastauflage (4) zugewandtes freies Ende bilden.

8. Handkarre nach Anspruch 7, **dadurch gekennzeichnet, dass** der Abstand der Finger (14) voneinander zwischen 10 und 20 cm beträgt.

9. Handkarre nach Anspruch 7 oder 8, **dadurch gekennzeichnet, dass** der Abstand der Finger voneinander quer zur Verschiebungsrichtung der Klaue veränderbar ist.

10. Handkarre nach Anspruch 7 oder 8, **dadurch gekennzeichnet, dass** die zwei Finger (14) zu den freien Enden hin aufeinander zulaufen.

11. Handkarre nach einem der Ansprüche 7 bis 10, **dadurch gekennzeichnet, dass** die Finger (14) an bezogen auf die Richtung der Radachse (3) äußeren Enden der Arme (13) gebildet sind.

12. Handkarre nach einem der Ansprüche 1 bis 6 rückbezogen, **dadurch gekennzeichnet, dass** ein Finger (14') in einer auf der Radachse (3) senkrechten Mittelebene angeordnet ist.

13. Handkarre nach einem der vorhergehenden Ansprüche, **dadurch gekennzeichnet, dass** die Arme (13) gewinkelt sind und jeweils bezogen auf die zur Radachse parallele Richtung einen vom Rahmen (1) nach außen gerichteten Abschnitt (30) und einen daran anschließenden nach innen gerichteten Abschnitt (32) aufweisen.

14. Handkarre nach Anspruch 13, **dadurch gekennzeichnet, dass** die Finger (14') an einander zugewandten Enden der Arme (13') gebildet sind.

15. Handkarre nach einem der vorhergehenden Ansprüche, **dadurch gekennzeichnet, dass** an wenigstens einem Arm (13) ein Sicherungskörper (35) verschiebbar angebracht ist.

16. Handkarre nach einem der Ansprüche 1 bis 10, **dadurch gekennzeichnet, dass** die Arme durch Kanten einer Platte (13", 13"') gebildet sind, die sich vom Rahmen (1) aus nach vorn und in seitlicher Richtung auseinanderlaufend erstrecken.

17. Handkarre nach Anspruch 16, soweit nicht auf einen der Ansprüche 7 bis 10 rückbezogen, **dadurch gekennzeichnet, dass** ein Finger (14", 14"') in einer auf der Radachse (3) senkrechten Mittelebene angeordnet ist.

18. Handkarre nach Anspruch 17, **dadurch gekennzeichnet, dass** der Finger (14"') aus der Platte (13"') ausgeklinkt ist.

19. Handkarre nach Anspruch 17 oder 18, **dadurch gekennzeichnet, dass** wenigstens ein weiterer Finger (35", 35"') zwischen dem Finger (14", 14"') und dem Holm (1) angeordnet ist.

20. Handkarre nach Anspruch 19, **dadurch gekennzeichnet, dass** der weitere Finger (35"') an einer anderen Seite eines Lochs (39) der Platte (13"') dem Finger (14"') gegenüberliegt.

21. Handkarre nach Anspruch 19, **dadurch gekennzeichnet, dass** der weitere Finger (35") verschiebbar ist.

22. Handkarre nach einem der vorhergehenden Ansprüche, **dadurch gekennzeichnet, dass** der wenigstens eine Handgriff (15) sich bei stehender Karre ungefähr in Hüfthöhe eines durchschnittlichen Benutzers befindet.

23. Handkarre nach einem der vorhergehenden Ansprüche, **dadurch gekennzeichnet, dass** der Rahmen (1) zwischen der Achse (3) und dem Handgriff (15) teleskopisch ausziehbar ist.

24. Handkarre nach einem der vorhergehenden Ansprüche, **dadurch gekennzeichnet, dass** der Rahmen (1) zwischen der Achse (3) und dem Handgriff (15) ein Scharnier aufweist.

25. Einachsige Handkarre mit einem langgestreckten Rahmen (1), der in einem unteren Bereich (1b) eine Lastauflage (4) und eine Radachse (3) aufweist, und der in einem oberem Bereich (1a) wenigstens einen Handgriff (15) aufweist, insbesondere nach einem der vorhergehenden Ansprüche, **dadurch gekennzeichnet, dass** ein einstückiger Sicherungsbügel (5') jeweils an einem ersten und einem zweiten Punkt (21) mit der Radachse (3) und an einem dritten Punkt (22) mit dem Rahmen (1) fest verbunden ist und jenseits des ersten bzw. zweiten Punkts (21) sich nach vorn erstreckende und in seitlicher Richtung auseinanderlaufende Schenkel (20) aufweist.

26. Handkarre nach Anspruch 25, **dadurch gekennzeichnet, dass** der dritte Punkt (22) am Rahmen (1) höher liegt als die Radachse (3).

27. Handkarre nach Anspruch 25 oder 26, **dadurch gekennzeichnet, dass** der vertikale Abstand zwischen freien Enden des Sicherungsbügels und der Lastauflage bemessen ist, um einen Kübeluntersetzer dazwischen einzuklemmen.

28. Handkarre nach einem der vorhergehenden Ansprüche, **dadurch gekennzeichnet, dass** sie mit einem Spanngurt (24) zum Herumlegen um eine zu befördernde Last (8) ausgestattet ist.
